# FASCICULE DE BREVET EUROPEEN

(11) **EP 0 641 682 B1**
(45) Date de publication et mention de la délivrance du brevet: **19.11.1997**
(21) Numéro de dépôt: 94401972.8
(22) Date de dépôt: 06.09.1994
(51) Int. Cl.: B60H 1/00, F16C 11/12, F16C 7/00

(54) **Piece de transmission incorporant des ponts de matière formant charnière**
Übertragungsteil mit scharnierformenden Materialbrücken
Transmitting member incorporating hinge forming bridges of material

(30) Priorité: 07.09.1993 FR 9310608
(43) Date de publication de la demande: 08.03.1995
(73) Titulaire: BEHR FRANCE, F-68250 Rouffach (FR)
(72) Inventeur: Mehlig, Rupert, F-68000 Colmar (FR); Debelay, Patrick, F-68000 Horbourg-Wihr (FR); Haeffele, Edmond, F-68250 Pfaffenheim (FR)
(74) Mandataire: Martin, Jean-Jacques

(56) Documents cités:
- FR-A- 2 454 654
- FR-A- 2 575 116
- FR-A- 2 656 387
- GB-A- 1 033 233
- US-A- 3 405 539

## Description

La présente invention concerne une pièce de transmission en matière plastique destinée à l'accouplement en rotation de deux organes mobiles aptes à pivoter autour d'axes de rotation parallèles, tels que deux volets contrôlant la distribution d'un flux d'air dans un habitacle de véhicule automobile.

On a proposé dans la demande de brevet FR 2 454 654 d'accoupler en rotation deux volets au moyen d'une transmission de longueur ajustable, comportant deux leviers respectivement fixés aux volets et reliés par une bielle s'articulant sur les leviers au moyen de goujons formés sur ceux-ci et introduits dans des perçages de la bielle. Afin de rattraper notamment les jeux de fabrication des différents éléments constitutifs de la transmission, la bielle est réalisée en deux éléments assemblés de manière réglable. Une transmission connue de ce type comporte un nombre élevé de pièces, ce qui la rend coûteuse à produire et à assembler. Par ailleurs, les articulations de la bielle sur les leviers doivent être graissées pour éviter une usure prématurée et pour garantir un fonctionnement sans bruit de la transmission.

La présente invention a pour objet une pièce de transmission perfectionnée comprenant deux leviers aptes à être reliés chacun à un organe mobile, qui permet d'accoupler de façon précise ces deux organes mobiles en rotation autour d'axes parallèles, et dont le coût est réduit par rapport aux transmissions connues.

L'invention y parvient par le fait que les deux leviers sont reliés par au moins un pont de matière formant charnière, venu de formation avec les leviers et d'épaisseur minimale choisie pour permettre une liaison articulée des leviers.

L'invention permet ainsi de réduire le nombre de pièces et par conséquent le coût de montage de la transmission.

Dans une réalisation préférée de l'invention, la pièce de transmission comporte deux leviers aptes à être couplés en rotation chacun avec un organe mobile, reliés par une bielle, venue de formation avec les leviers et raccordée à ces derniers par des ponts de matière formant charnière, d'épaisseur minimale choisie pour permettre une liaison articulée de la bielle et des leviers.

Ainsi, grâce à l'invention, la transmission ne comporte plus qu'une seule pièce, les jeux d'articulation entre la bielle et les leviers sont supprimés et un graissage n'est plus nécessaire.

De préférence, ladite épaisseur minimale est comprise entre 0,2 et 1 mm.

De préférence également, lesdits ponts de matière formant charnière sont aplatis selon une direction parallèle auxdits axes de rotation et présentent des faces principales concaves vers l'extérieur, de rayon de courbure supérieur ou égal à 0,2 mm.

Avantageusement, la bielle présente des parties d'extrémité en forme de coin, raccordées à leur sommet aux leviers par lesdits ponts de matière formant charnière.

De préférence, ces parties d'extrémité en forme de coin sont délimitées par deux faces planes latérales parallèles auxdits axes de rotation, formant entre elles un dièdre d'angle au sommet voisin de 30° et sont délimitées par deux autres faces planes latérales orientées transversalement auxdits axes de rotation, divergeant en éloignement de la bielle, en formant de préférence un angle de 15° avec un plan perpendiculaire auxdits axes de rotation.

De préférence, la pièce de transmission est réalisée par moulage par injection en polypropylène, les ponts de matière formant charnière étant sollicités en pivotement autour de leur ligne de raccordement sur les leviers peu après le démoulage.

La présente invention a également pour objet un dispositif de distribution d'air à l'intérieur d'un habitacle de véhicule automobile, équipé d'une pièce de transmission telle que précitée.

D'autres caractéristiques et avantages de la présente invention apparaîtront à la lecture de la description qui va suivre, de deux exemples de réalisation non limitatifs de l'invention et à l'examen du dessin annexé sur lequel :
- la figure 1 est une vue de dessus, schématique, prise selon une direction parallèle aux axes de pivotement des leviers, d'une pièce de transmission conforme à un premier exemple de réalisation de l'invention, et d'un mécanisme d'entraînement en rotation, partiellement représenté, de l'un des leviers,
- la figure 2 est une vue de dessus montrant des détails de réalisation du raccordement de la bielle sur un levier,
- la figure 3 est une vue de côté, prise selon la direction de la flèche III de la figure 1, et
- la figure 4 est une vue en perspective d'une pièce de transmission conforme à un deuxième exemple de réalisation de l'invention.

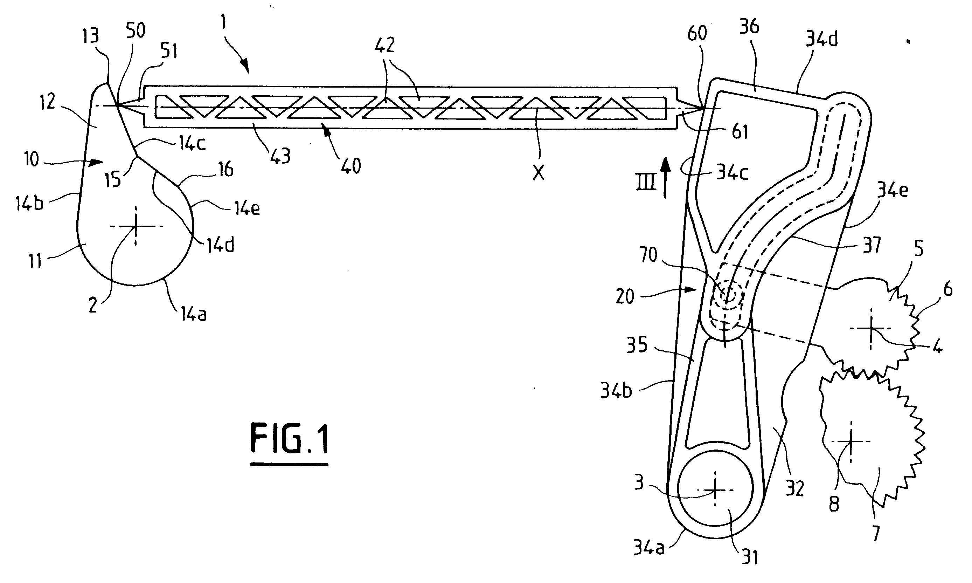

La pièce de transmission 1 conforme à l'invention représentée sur les figures 1 à 3 est destinée à accoupler en rotation deux organes mobiles connus en eux-mêmes et non représentés, montés à rotation autour d'axes de rotation parallèles. Plus particulièrement, dans l'exemple de réalisation décrit, la pièce de transmission 1 équipe un dispositif de distribution d'air dans un habitacle de véhicule automobile. Elle accouple en rotation un premier et un deuxième volets, montés à rotation sur une paroi d'un carter C du dispositif, respectivement autour d'axes de rotation référencés 2 et 4, pour contrôler la répartition d'un flux d'air circulant du côté intérieur de la paroi du carter vers deux sorties d'air spécifiques dans l'habitacle du véhicule. La pièce de transmission 1 comporte deux leviers 10 et 20 aptes à être couplés en rotation, d'une façon connue en soi, avec les volets précités, ces leviers étant reliés par une bielle 40 située du côté extérieur de la paroi du carter. Le levier 10 comprend une partie d'extrémité 11 munie de moyens de montage autour de l'axe de rotation 2, engagés dans un perçage de la paroi du carter. Ces moyens de montage sont connus en eux-mêmes et non représentés sur les figures. Le premier volet du dispositif de distribution d'air est fixé à ces moyens de montage du côté intérieur de la paroi du carter. La partie d'extrémité 11 est prolongée radialement, du côté extérieur de la paroi du carter, perpendiculairement à l'axe de rotation 2, par un bras 12 au voisinage de l'extrémité radialement externe 13 duquel se raccorde la bielle 40.

Le levier 10 présente un contour, en vue de dessus du côté extérieur de la paroi du carter, qui est délimité par une surface s'étendant parallèlement à l'axe de rotation 2. Celle-ci est constituée par la réunion d'une surface cylindrique de révolution 14a s'étendant sur un secteur angulaire de 180° environ autour de l'axe 2 sur la partie d'extrémité 11 à l'opposé du bras 12, d'une surface généralement plane 14b reliant un côté de la surface 14a à l'extrémité 13, et de trois surfaces planes successives 14c, 14d et 14e reliant l'extrémité 13 au côté opposé de la surface 14a. Les couples de surfaces 14c, 14d et 14d, 14e définissent entre eux des dièdres d'angles au sommet respectivement rentrant 15 et saillant 16. Dans l'exemple de réalisation décrit, la bielle 40 se raccorde à une extrémité sur la surface 14c par un premier pont de matière formant charnière 50, selon une ligne de raccordement parallèle à l'axe de rotation 2. A titre indicatif, la ligne de raccordement de la bielle 40 sur le levier 20 se situe à 23 mm de l'axe de rotation 2, la surface 14d forme un angle de 47° environ avec le plan contenant l'axe de rotation 2 et la ligne de raccordement de la bielle 40 sur le levier 10, et les angles 15 et 16 valent 143° et 216° approximativement. On peut proposer bien entendu d'autres géométries du levier 10 sans sortir du cadre de la présente invention.

La bielle 40 se présente dans l'exemple de réalisation décrit sous la forme d'une tige rectiligne aplatie, s'étendant selon un axe longitudinal X contenu dans un plan perpendiculaire aux axes de rotation 2 et 4. Des évidements 42, généralement en forme de triangle, sont formés de façon connue en soi sur les faces 43 de plus grande largeur de la bielle 40, perpendiculaires aux axes de rotation 2 et 4, pour réduire la quantité de matière nécessaire à la réalisation de la bielle tout en conservant une résistance mécanique suffisante. La bielle 40 se raccorde sur le levier 20, à l'extrémité opposée au premier pont de matière formant charnière 50, par un deuxième pont de matière formant charnière 60.

Le levier 20 comporte une partie d'extrémité 31 munie de moyens de montage en pivotement autour d'un axe de rotation 3 parallèle aux axes de rotation 2 et 4. Ces moyens de montage, connus en eux-mêmes et non représentés, coopèrent avec un logement de la paroi du carter. Cette partie d'extrémité 31 est prolongée radialement, du côté extérieur de la paroi du carter, par une platine 32 s'étendant perpendiculairement à l'axe de rotation 3. Le levier 20 présente un contour, en vue de dessus du côté extérieur de la paroi du carter, qui est délimité par une surface s'étendant parallèlement à l'axe de rotation 3. Cette surface est constituée par la réunion d'une surface cylindrique de révolution 34a autour de l'axe de rotation 3, s'étendant selon un secteur angulaire de 280° environ sur la partie d'extrémité 31, à l'opposé de la platine 32, et par quatre surfaces généralement planes 34b, 34c, 34d et 34e définissant le contour de la platine 32. Les surfaces 34b et 34e s'étendent sur deux côtés opposés de la platine 32 et se raccordent respectivement tangentiellement à une extrémité sur un côté de la surface 34a. Les surfaces 34b et 34e divergent en éloignement de l'axe de rotation 3 en faisant un angle de 15° environ entre elles. La surface 34b se raccorde, à l'opposé de la partie d'extrémité 31, sur la surface 34c en formant un angle saillant de 188° environ avec celle-ci. La surface 34d réunit les surfaces 34c et 34e en s'étendant généralement perpendiculairement à la surface 34c. Bien entendu, comme pour le levier 10, la géométrie particulière du levier 20 n'est donnée ici qu'à titre indicatif.

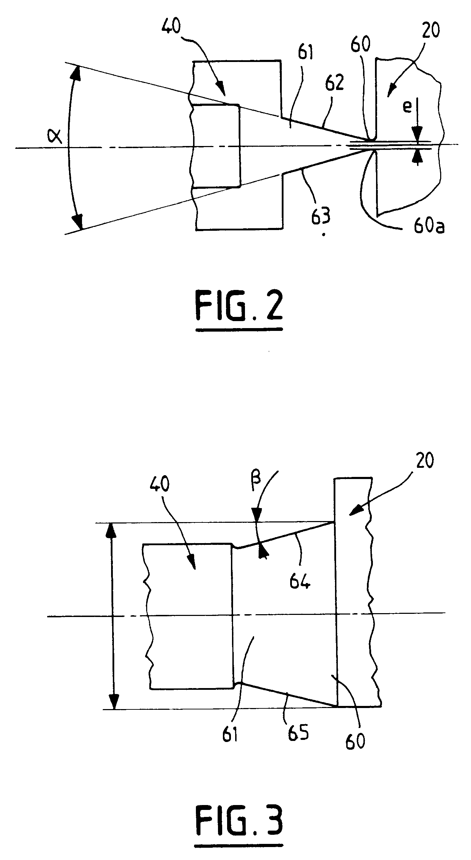

La bielle 40 se raccorde sur la surface 34c selon une ligne de raccordement s'étendant parallèlement à l'axe de rotation 3. A titre indicatif, la longueur des lignes de raccordement de la bielle sur les leviers 10 et 20 vaut 9 mm dans l'exemple de réalisation décrit. La bielle 40 présente des parties d'extrémité 51 et 61 en forme de coin, raccordées aux leviers 10 et 20 à leur sommet par lesdits ponts de matière formant charnière 50 et 60. De préférence, comme représenté, ces parties d'extrémité 51 et 61 sont délimitées par deux faces planes latérales orientées parallèlement aux axes de rotation 2 et 3, formant entre elles un dièdre d'angle au sommet α voisin de 30°. On a représenté sur la figure 2 la partie d'extrémité 61 de la bielle 40, délimitée par deux faces planes latérales 62 et 63 s'étendant parallèlement aux axes de rotation 2 et 3. Les parties d'extrémité 51 et 61 sont également délimitées par deux autres faces planes latérales s'étendant transversalement aux axes de rotation 2 et 3, référencées 64 et 65 pour la partie d'extrémité 61 sur la figure 3. Ces faces planes latérales divergent en éloignement de la bielle 40 en formant un angle β, de préférence égal à 15°, avec un plan perpendiculaire aux axes de rotation 2 et 3. De préférence, les ponts de matière formant charnière 50 et 60 sont délimités sur leur longueur par deux faces principales concaves vers l'extérieur, référencées 60a pour le pont de matière 60 représenté la figure 2. Le rayon de courbure de ces faces principales est avantageusement supérieur ou égal 0,2 mm et l'épaisseur minimale de matière e définie entre ces faces principales est avantageusement comprise entre 0,2 et 1 mm.

Les leviers 10 et 20 sont réalisés par l'homme de métier en fonction de la cinématique que l'on cherche à obtenir dans l'accouplement des organes mobiles en rotation. Dans l'exemple de réalisation décrit, la platine 32 du levier 20 comporte une gorge d'entraînement 37 ouverte vers la paroi du carter pour accueillir un doigt d'entraînement 70 d'un mécanisme de commande connu en lui-même ét partiellement représenté. Des nervures de raidissement 35 et 36 sont réalisées de façon connue en soi sur la platine 32 et s'étendent respectivement depuis la gorge 37 jusqu'à la partie d'extrémité 31 et depuis la gorge 37 vers et le long des bords de la platine 32 définis par les surfaces 34c et 34d.

La gorge 37 présente une partie curviligne 37a s'étendant selon un arc de cercle centré sur l'axe de rotation 4 sur un secteur angulaire de 60° environ, prolongée en éloignement de l'axe de rotation 3 par une partie rectiligne 37b sensiblement parallèle au plan de la surface 34e. Le doigt d'entraînement 70 est situé à l'extrémité d'un levier d'entraînement 5 connu en lui-même, monté à rotation autour de l'axe 4 sur la paroi du carter. Le deuxième volet du dispositif de distribution est fixé au levier d'entraînement 5 du côté intérieur de la paroi du carter. Le levier 5 présente une denture 6 engrénant avec un secteur denté 7 monté à rotation sur la paroi du carter, du côté extérieur de celle-ci, autour d'un axe 8 parallèle à l'axe 4 et apte à être entraîné en pivotement par un occupant du véhicule.

La cinématique de l'accouplement qui vient d'être décrit est la suivante. Dans la position de la figure 1, les premier et deuxième volets ferment deux conduits respectifs formés à l'intérieur du carter, communiquant avec deux sorties d'air spécifiques à l'intérieur de l'habitacle du véhicule, pour diriger de l'air par exemple vers le plancher du véhicule et vers le pare-brise. Le deuxième volet est apte à pivoter entre deux positions de fermeture du conduit qu'il équipe. Le doigt d'entraînement 70 vient en butée contre l'extrémité axiale de la gorge 37 la plus proche de l'axe de rotation 3. Lorsque le secteur denté 7 est entraîné en rotation dans le sens anti-horaire autour de l'axe 8 sur la figure 1, le bras d'entraînement 5 pivote dans le sens horaire autour de l'axe de rotation 4 et le deuxième volet pivote et quitte sa première position de fermeture pour laisser passer de l'air dans le conduit qu'il équipe. Lors du pivotement du bras d'entraînement 5, le doigt d'entraînement 70 se déplace dans la partie curviligne 37a de la gorge 37 sans entraîner en rotation le levier 20 autour de l'axe de rotation 3 et le premier volet conserve sa position de fermeture. Au terme d'une course en rotation déterminée du secteur denté 7, correspondant à la pleine ouverture du deuxième volet, le doigt d'entraînement 70 atteint la partie rectiligne 37b de la gorge 37 et entraîne en rotation le levier 20 autour de l'axe 3 et conjointement, le levier 10 par l'intermédiaire de la bielle 40. Le premier volet s'ouvre tandis que le deuxième continue sa course en rotation vers une deuxième position de fermeture. Lorsque le doigt d'entraînement 70 atteint l'extrémité axiale de la gorge 37 la plus éloignée de l'axe de rotation 3, le premier volet atteint sa position de pleine ouverture tandis que le deuxième volet atteint sa deuxième position de fermeture. Dans cette position des leviers, la bielle 40 s'étend sensiblement parallèlement au plan de la surface 14d.

La pièce de transmission 1 est avantageusement réalisée en polypropylène ou autre matière plastique par moulage par injection, dans sa configuration représentée sur la figure 1. On veillera, lors du démoulage de la pièce et lorsque celle-ci est encore chaude, à plier les ponts de matière formant charnière au moins une fois autour d'un axe parallèle à l'axe de rotation des leviers de manière à agir sur l'orientation des molécules constituant les ponts de matière en vue de conférer à ces derniers la souplesse nécessaire pour l'articulation.

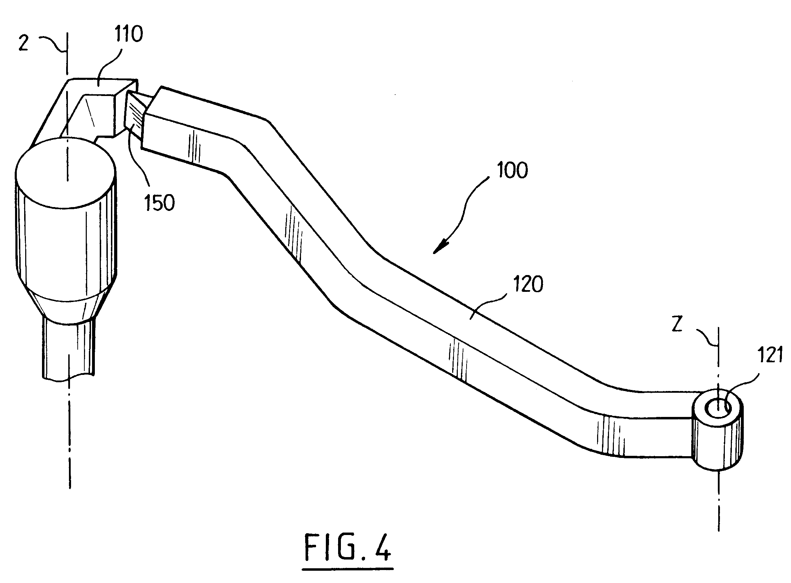

On a représenté sur la figure 4 une pièce de transmission 100 conforme à un deuxième exemple de réalisation de l'invention. La pièce de transmission 100 comporte deux leviers 110 et 120 aptes à pivoter autour d'axes de rotation parallèles et reliés par un pont de matière 150 venu de formation avec les leviers 110 et 120.

Le pont de matière 150 est de préférence semblable au pont de matière 50 précédemment décrit et ne sera pas décrit à nouveau en détail. Le levier 110 est dans l'exemple de réalisation décrit destiné à être monté à rotation autour de l'axe 2 précité et ainsi accouplé en rotation avec l'un des volets.

Le levier 120 est allongé et muni à son extrémité opposée au pont de matière 150 d'un logement 121 cylindrique de révolution autour d'un axe Z, destiné à être engagé sur un goujon d'entraînement porté par un levier non représenté semblable au levier 20 précité, accouplé en rotation avec le volet monté en rotation autour de l'axe 3 et commandé en rotation au moyen du levier d'entraînement 5.

L'invention n'est pas limitée à l'application décrite destinée au secteur automobile et s'étend à tous les domaines où l'on cherche à accoupler en rotation d'une façon précise deux organes mobiles en rotation dans une plage angulaire limitée. On peut également proposer de fixer directement aux leviers les deux organes mobiles que l'on cherche à accoupler en rotation, ou bien coupler en rotation chaque levier à un organe mobile par l'intermédiaire d'un mécanisme à engrenage.

## Revendications

1. Pièce de transmission (1) en matière plastique destinée à l'accouplement en rotation de deux organes mobiles aptes à pivoter autour d'axes de rotation parallèles (2, 4), comprenant deux leviers aptes à être reliés chacun à un organe mobile, caractérisée en ce qu'elle est réalisée par moulage par injection dans une matière plastique et en ce que les leviers sont reliés par au moins un pont de matière formant charnière (50, 60; 150), venu de formation avec les leviers et d'épaisseur minimale (e) choisie pour permettre une liaison articulée des leviers.

2. Pièce de transmission selon la revendication 1, caractérisée en ce qu'elle comporte deux leviers (10, 20) aptes à être couplés en rotation chacun avec un organe mobile, reliés par une bielle (40), venue de formation avec les leviers et raccordée à ces derniers par des ponts de matière formant charnière (50, 60), d'épaisseur minimale (e) choisie pour permettre une liaison articulée de la bielle et des leviers.

3. Pièce de transmission selon l'une des revendications 1 et 2, caractérisée en ce que ladite épaisseur minimale (e) est comprise entre 0,2 et 1 mm.

4. Pièce de transmission selon l'une des revendications 1 à 3, caractérisée en ce que chaque pont de matière formant charnière est aplati selon une direction parallèle auxdits axes de rotation et présente des faces principales (60a) concaves vers l'extérieur, de rayon de courbure supérieur ou égal à 0,2 mm.

5. Pièce de transmission selon la revendication 2, caractérisée en ce que la bielle (40) présente des parties d'extrémité (51, 61) en forme de coin, raccordées aux leviers (10, 20) à leur sommet par lesdits ponts de matière formant charnière (50, 60).

6. Pièce de transmission selon la revendication 5, caractérisée en ce que les parties d'extrémité en forme de coin sont délimitées par deux faces planes (62, 63) orientées parallèlement auxdits axes de rotation et formant entre elles un dièdre d'angle au sommet (α) voisin de 30°.

7. Pièce de transmission selon l'une des revendications 5 ou 6, caractérisée en ce que lesdites parties d'extrémité en forme de coin sont délimitées par deux faces planes (64, 65) orientées transversalement auxdits axes de rotation et divergeant en éloignement de la bielle.

8. Pièce de transmission selon la revendication 7, caractérisée en ce que lesdites faces planes (64, 65) orientées transversalement aux axes de rotation et divergeant en éloignement de la bielle forment chacune un angle (β) de 15° avec un plan perpendiculaire auxdits axes de rotation.

9. Pièce de transmission selon l'une des revendications 1 à 8, caractérisée en ce que chaque pont de matière formant charnière est sollicité en pivotement autour de sa ligne de raccordement sur un levier peu après le démoulage.

10. Dispositif de distribution d'air à l'intérieur d'un habitacle de véhicule automobile équipé d'une pièce de transmission (1) selon l'une des revendications 1 à 9.

## Claims

1. Transmitting member (1) made of plastic intended for the rotational coupling of two moving parts which are capable of pivoting about parallel axes (2, 4) of rotation, comprising two levers each of which can be connected to one moving part, characterized in that this member is made of a plastic by injection moulding and in that the levers are connected by at least one hinge-forming bridge (50, 60; 150) of material, formed at the time the levers are formed and having a minimal thickness (e) chosen to give a hinged connection of the levers.

2. Transmitting member according to Claim 1, characterized in that it includes two levers (10, 20) each of which can be coupled in terms of rotation with a moving part, these levers being connected by a link rod (40) formed at the time the levers are formed and attached to them by hinge-forming bridges (50, 60) of material, of minimal thickness (e) chosen to give a hinged connection between the link rod and the levers.

3. Transmitting member according to either of Claims 1 and 2, characterized in that the said minimal thickness (e) is between 0.2 and 1 mm.

4. Transmitting member according to one of Claims 1 to 3, characterized in that each hinge-forming bridge of material is flattened in a direction parallel to the said axes of rotation and has outwardly concave main faces (60a) with a radius of curvature greater than or equal to 0.2 mm.

5. Transmitting member according to Claim 2, characterized in that the link rod (40) has wedge-shaped end parts (51, 61) attached to the levers (10, 20) at their vertex by the said hinge-forming bridges (50, 60) of material.

6. Transmitting member according to Claim 5, characterized in that the wedge-shaped end parts are delimited by two flat faces (62, 63) oriented parallel to the said axes of rotation and forming between them a dihedron with a vertex angle (α) of close to 30°.

7. Transmitting member according to either of Claims 5 and 6, characterized in that the said wedge-shaped end parts are delimited by two flat faces (64, 65) oriented transversely to the said axes of rotation and diverging away from the link rod.

8. Transmitting member according to Claim 7, characterized in that the said flat faces (64, 65) oriented transversely to the axes of rotation and diverging away from the link rod each form an angle (β) of 15° with a plane perpendicular to the said axes of rotation.

9. Transmitting member according to one of Claims 1 to 8, characterized in that each hinge-forming bridge of material is pivoted about the line attaching it to a lever shortly after demoulding.

10. Device for distributing air inside a motor vehicle cabin, equipped with a transmitting member (1) according to one of Claims 1 to 9.

## Patentansprüche

1. Übertragungselement (1) aus Kunststoff, das zur rotatorischen Kopplung zweier beweglicher Organe bestimmt ist, die zur Drehung um die parallelen Rotationsachsen (2, 4) geeignet sind, das zwei Hebel umfaßt, die geeignet sind, um mit jeweils einem beweglichen Organ verbunden zu werden, dadurch gekennzeichnet, daß es durch Spritzguß aus einem Kunststoffmaterial hergestellt ist und die Hebel über wenigstens eine scharnierbildende Materialbrücke (50, 60; 150) verbunden sind, die aus einem Stück mit den Hebeln gebildet und von einer minimalen Dicke (e) ist, die gewählt ist, um eine schwenkbare Verbindung der Hebel zu ermöglichen.

2. Übertragungselement nach Anspruch 1, dadurch gekennzeichnet, daß es zwei Hebel (10, 20) umfaßt, die zur rotatorischen Kopplung mit jeweils einem beweglichen Organ geeignet und über eine Pleuelstange (40) verbunden sind, die aus einem Stück mit den Hebeln gebildet und mit letzteren über die scharnierbildenden Materialbrücken (50, 60) einer minimalen Dicke (e) verbunden ist, die gewählt ist, um eine schwenkbare Verbindung der Pleuelstange und der Hebel zu ermöglichen.

3. Übertragungselement nach einem der Ansprüche 1 und 2, dadurch gekennzeichnet, daS die minimale Dicke (e) zwischen 0,2 und 1 mm liegt.

4. Übertragungselement nach einem der Ansprüche 1 bis 3, dadurch gekennzeichnet, daß jede scharnierbildende Materialbrücke in einer Richtung parallel zu den Rotationsachsen abgeflacht ist und die nach innen konkaven Hauptflächen (60a) mit einem Krümmungsradius von größer oder gleich 0,2 mm aufweist.

5. Übertragungselement nach Anspruch 2, dadurch gekennzeichnet, daß die Pleuelstange (40) die keilförmigen Endteile (51, 61) aufweist, die an ihren Spitzen über die scharnierbildenden Materialbrücken (50, 60) mit den Hebeln (10, 20) verbunden sind.

6. Übertragungselement nach Anspruch 5, dadurch gekennzeichnet, daS die keilförmigen Endteile durch zwei ebene Flächen (62, 63) begrenzt sind, die parallel zu den Rotationsachsen ausgerichtet sind, und untereinander einen Dieder mit einem Spitzenwinkel (α) um 30° bilden.

7. Übertragungselement nach einem der Ansprüche 5 oder 6, dadurch gekennzeichnet, daß die keilförmigen Endteile durch zwei ebene Flächen (64, 65) begrenzt sind, die quer zu der Rotationsachse ausgerichtet sind und in Verlängerung des Pleuels divergieren.

8. Übertragungselement nach Anspruch 7, dadurch gekennzeichnet, daß die ebenen Flächen (64, 65) quer zu den Rotationsachsen ausgerichtet sind und in Verlängerung der Pleuelstange divergieren und jeweils einen Winkel (α) von 15° mit einer Ebene bilden, die zu den Rotationsachsen senkrecht steht.

9. Übertragungselement nach einem der Ansprüche 1 und 8, dadurch gekennzeichnet, daß jede scharnierbildende Materialbrücke kurze Zeit nach dem Ausformen drehbar um ihre Verbindungslinie auf einem Hebel belastet wird.

10. Vorrichtung zur Verteilung von Luft im Inneren einer Kraftfahrzeug-Fahrgastzelle, die mit einem Übertragungselement (1) nach einem der Ansprüche 1 bis 9 ausgestattet ist.
